# EUROPÄISCHE PATENTSCHRIFT

(11) **EP 3 053 675 B1**
(45) Veröffentlichungstag und Bekanntmachung des Hinweises auf die Patenterteilung: **12.06.2019**
(21) Anmeldenummer: 16151520.0
(22) Anmeldetag: 15.01.2016
(51) Int. Cl.: B22F 3/105, B29C 64/153, B33Y 10/00, B33Y 30/00, B29C 64/20

(54) **PULVERAUFTRAGSEINHEIT, ENTSPRECHENDE VORRICHTUNG UND VERWENDUNG EINER PULVERAUFTRAGSEINHEIT**
POWDER APPLICATION UNIT, CORRESPONDING DEVICE AND USE OF A POWDER APPLICATION UNIT
UNITE D'APPLICATION DE POUDRE, DISPOSITIF CORRESPONDANT ET UTILISATION D'UNE UNITE D'APPLICATION DE POUDRE

(30) Priorität: 03.02.2015 DE 102015201796
(43) Veröffentlichungstag der Anmeldung: 10.08.2016
(73) Patentinhaber: MTU Aero Engines AG, 80995 München (DE)
(72) Erfinder: Fisser, Maximilian, 83684 Tegernsee (DE); Schlick, Georg, 80809 München (DE)

(56) Entgegenhaltungen:
- WO-A2-2011/001270
- DE-B4-102005 022 308

## Beschreibung

Die Erfindung betrifft eine Pulverauftragseinheit, eine entsprechende Vorrichtung, die diese Pulvereinheit umfasst und eine Verwendung der erfindungsgemäßen Pulverauftragseinheit oder Vorrichtung.

Die additive bzw. generative Herstellung ist unter verschiedenen Namen bekannt, die meisten davon sind Marken von Maschinenproduzenten oder Forschungseinrichtungen. Dazu gehören Selective Laser Melting (SLM, Selektives Laserschmelzen), Direct Metal Laser Sintering (DMLS, Direktes Metall-Laser-Sintern), Laser Powder Bed (LPB, Laserstrahl-Pulverbett) und Laser-Cusing (Laserstrahlschmelzen).

Das Verfahren beinhaltet das selektive Schmelzen einer auf einer Grundplatte aufgebrachten Pulverschicht mit einem Laser bzw. Elektronenstrahl. Danach wird die Grundplatte abgesenkt und eine weitere Pulverschicht aufgebracht. Das Verfahren wird solange wiederholt, bis eine ausreichende Anzahl von Schichten gebildet wurde, um ein komplettes dreidimensionales Objekt zu erzeugen.

Zum Aufbringen des Pulvers auf die Grundplatte wird ein Beschichter quer über die Grundplatte verschoben, der vor sich einen Pulverberg schiebt. Der Beschichter weist einen bestimmten Abstand zur vorherigen Pulverschicht auf Typischerweise kommen als Beschichter Klingen oder Bürsten zum Einsatz. Bei diesen Pulverbett basierten Herstellverfahren ist die Oberflächenrauheit unter anderem von den Partikeldurchmessern abhängig. Je kleiner die Partikelgröße ist, umso kleiner wird die Oberflächenrauheit des hergestellten Bauteils. Allerdings ist ein Metallpulver mit kleineren Partikeldurchmessern hygroskopisch, d.h. die Feuchtigkeit, insbesondere Wasser, aus der Umgebung wird an den Oberflächen der Partikel gebunden. Dadurch kann das Pulver verklumpen und das Pulver lässt sich nicht mehr mit einer gleichmäßigen Dicke verteilen. Ferner wird für das im Pulver befindliche Wasser zusätzlich Energie benötigt, um das Pulver aufzuschmelzen. Allerdings ist die zusätzliche Energie von der gebundenen Wassermenge abhängig. Dies kann dazu führen, dass in einem lokal trockenen Bereich einer Schicht das Pulver vollständig aufschmilzt und in einem lokal feuchten Bereich der gleichen Schicht das Pulver nur teilweise aufgeschmolzen wird. Dies hat zur Folge, dass die Schicht nur bereichsweise mit der vorherigen Schicht verbunden ist. Im schlimmsten Fall muss das teilweise hergestellte Bauteil verschrottet werden.

Aus der deutschen Patentschrift DE 10 2005 022 308 B4 ist ein Beschichter zum Auftragen von pulverförmigen Schichten in einer Vorrichtung zum Herstellen eines dreidimensionalen Objekts bekannt, welcher eine steife Klinge aufweist, die starr mit dem Beschichter verbunden ist, sowie eine Heizeinrichtung zum Vorwärmen des pulverförmigen Materials aufweist, die zumindest teilweise in den Beschichter integriert ist.

Somit liegt der vorliegenden Erfindung die Aufgabe zu Grunde, eine Pulverauftragseinheit vorzustellen, die trockenes Pulver aufbringt.

Die Aufgabe wird durch die Merkmale des Anspruchs 1 gelöst. Die Aufgabe wird ferner durch die Merkmale des Anspruchs 9 gelöst.

Die Erfindung betrifft eine Pulverauftragseinheit für eine Vorrichtung zur generativen Herstellung von Bauteilen mit mindestens einer elektrischen Leitung und mit mindestens einer Stromquelle, die an der elektrischen Leitung angeschlossen ist. Dabei fungiert die elektrische Leitung als Pulververteiler und als Heizelement. Dies hat den Vorteil, dass ein sogenannter Rakel zum Pulververteilen nicht benötigt wird. Ferner steht die als Wärmequelle fungierende elektrische Leitung direkt in Kontakt mit dem Pulver. Dadurch kann die Wärme besser in das Pulver eingebracht werden. Durch die lokale Wärmeeinbringung erhöht sich die Temperatur beispielsweise in einem Pulverbett einer SLM, SLS oder EBM-Anlage (EBM - electro beam melting). Dabei wird die im Pulver enthaltene und insbesondere durch Wasser hervorgerufene Restfeuchte verdampft, bevor die Pulverpartikel verschmolzen werden.

Erfindungsgemäß ist die elektrische Leitung spulenförmig um einen Kern gewickelt, wobei zwischen zwei benachbarten Wickelungen eine Isolierung angeordnet ist. Dabei ist die untere Fläche der Spule geschlossen, so dass das Pulver im Pulverberg gleichmäßig und glatt verteilbar ist. Eine solche Spule hat den Vorteil mechanisch wie eine Walze arbeiten zu können und elektrisch mehr Wärme erzeugen zu können. Die Isolierung kann Luft, aus Keramik und/oder aus Kunststoff sein.

In einer vorteilhaften Ausgestaltung der Erfindung weist die elektrische Leitung einen Hohlraum auf. Vorzugsweise kann der Hohlraum der elektrischen Leitung mit Kühlfluid gefüllt sein. Dies bietet den Vorteil, die Temperatur der elektrischen Leitung regulieren zu können.

In einer weiteren vorteilhaften Ausgestaltung der Erfindung weist die Pulverauftragseinheit eine Kühlpumpe zum Durchströmen des Hohlraums mit Kühlfluid auf, die mit dem Hohlraum in fluider Kommunikation steht. Dies bietet den Vorteil, die in der Leitung vorhandene Wärme besser abtransportieren zu können. Ferner kann die elektrische Leitung damit sehr schnell auf Raumtemperatur gekühlt werden. Dies bietet in vorteilhafterweise die Möglichkeit an, nur bestimmte Bereiche des Pulverbetts aufzuheizen.

In einer weiteren vorteilhaften Ausgestaltung der Erfindung ist die elektrische Leitung aus massivem Draht gebildet. Dies hat den Vorteil, dass hohe Ströme angelegt werden können, ohne dass die elektrische Leitung durchschmilzt.

In einer weiteren vorteilhaften Ausgestaltung der Erfindung ist die elektrische Leitung starr und/oder flexibel. In Abhängigkeit der Anwendung kann die elektrische Leitung beispielsweise an den Rändern flexibel und in der Mitte starr ausgelegt sein.

In einer weiteren vorteilhaften Ausgestaltung der Erfindung erzeugt die Stromquelle einen Gleichstrom und/oder einen Wechselstrom. Mittels dem Gleichstrom wird die elektrische Leitung als reiner Heizdraht betrieben. Dadurch wird alles in unmittelbarer Nähe aufgewärmt. Befindet sich also die elektrische Leitung beim Verteilen des Pulvers in der Nähe des bereits aufgebauten Bauteils, so wird der vor der elektrischen Leitung geschobene Pulverberg und der bereits aufgebaute Bereich des Bauteils aufgewärmt. Wird dagegen an der elektrischen Leitung ein Wechselstrom angelegt, so wird ein magnetisches Wechselfeld erzeugt, dass im bereits aufgebauten Bauteil durch Induktion ein Wechselstrom entstehen lässt. Dies hat zur Folge, dass nur der bereits aufgebaute Bereich des Bauteils aufgeheizt wird. Dabei bleibt das Pulver unbeeinflusst, da es einen zu hohen elektrischen Widerstand aufweist. Daher kann sich im Pulver kein Wirbelstrom aufbauen. Werden beispielsweise zwei getrennte elektrische Leitungen verwendet, so kann an der einen elektrischen Leitung ein Gleichstrom angelegt werden und an der anderen elektrischen Leitung ein Wechselstrom angelegt werden. Dies bietet den Vorteil über die Gleichstromleitung den Pulverberg aufzuwärmen. Die Gleichstromleitung kann beim Passieren des Bauteils diesen etwas vorwärmen. Die Wechselstromleitung kann dann zusätzlich Wärmeenergie in das Bauteil einbringen, ohne dass der Pulverberg zu stark aufgeheizt wird. Generell benötigt das einzelne Pulverpartikel zum Aufschmelzen weniger Wärmeenergie als der obere Bereich des Bauteils. Damit kann verhindert werden, dass die Partikel bereits im Pulverberg anschmelzen. Das feuchte Pulver soll nur getrocknet werden, um die Rieselfähigkeit des Pulvers im Pulverberg zu sichern.

In einer weiteren vorteilhaften Ausgestaltung der Erfindung ist die elektrische Leitung um einen, insbesondere weichmagnetischen, Kern gewickelt. Dies hat den Vorteil, dass die durch Wechselstrom erzeugte Induktion größer wird. Weichmagnetische Werkstoffe sind ferromagnetische Materialien, die sich in einem Magnetfeld leicht magnetisieren lassen. Dazu gehören unter anderem Eisen, Kobalt und Nickel.

Die Erfindung betrifft ferner eine Vorrichtung zur generativen Herstellung von Bauteilen gemäß Anspruch 10, mit mindestens einer absenkbaren Bauteilplattform, mit mindestens einer Pulverauftragseinheit zum Auftragen von mindestens einer Pulverschicht eines Bauteilwerkstoffs auf mindestens einer Aufbauzone der Bauteilplattform, wobei die Pulverauftragseinheit relativ zur Bauteilplattform bewegbar ist. Ferner umfasst die Vorrichtung mindestens eine Strahlungsquelle zum Erzeugen eines Hochenergiestrahls, mittels welchem die Pulverschicht im Bereich der Aufbauzone lokal zu einer Bauteilschicht verschmelzbar und/oder versinterbar ist. Dabei handelt es sich um eine Vorrichtung mit einem Pulverbett.

Die Erfindung umfasst außerdem die Verwendung der erfindungsgemäßen Pulverauftragseinheit oder der erfindungsgemäßen Vorrichtung in einem Verfahren zur generativen Herstellung von Bauteilen.

Weitere vorteilhafte Ausgestaltungen der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- - Figur 1:: eine Seitenansicht einer generativen Herstellvorrichtung mit einer erfindungsgemäßen Pulverauftragseinheit,
- - Figur 2:: eine Seitenansicht einer generativen Herstellvorrichtung mit einer erfindungsgemäßen Pulverauftragseinheit,
- - Figur 3:: einen Schnitt entlang der Linie III-III in Figur 2.

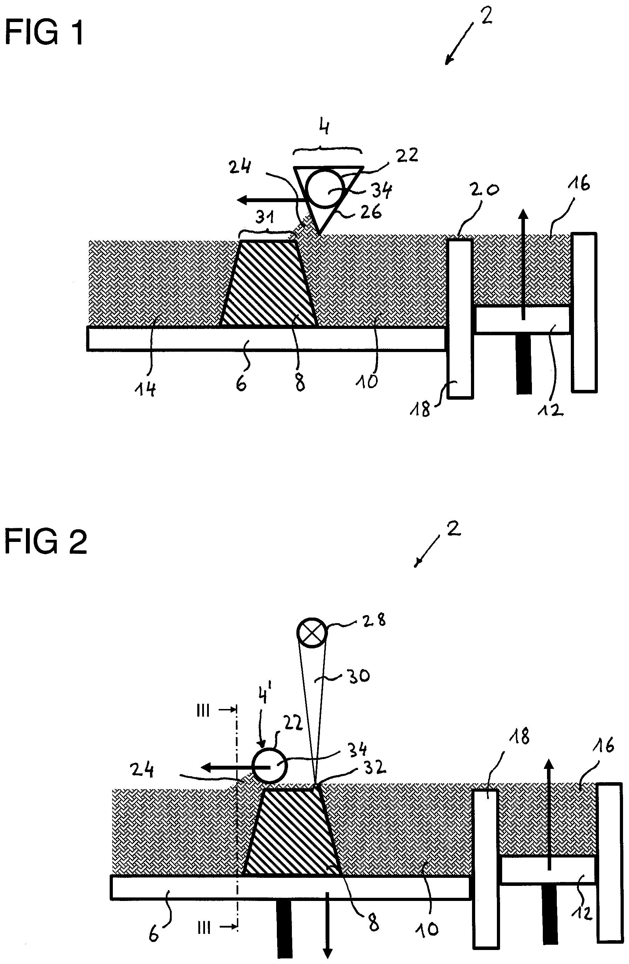

Die Figur 1 zeigt eine Seitenansicht einer generativen Herstellvorrichtung 2 mit einer erfindungsgemäßen Pulverauftragseinheit 4 nach einer ersten Ausführungsform. Die Figur 2 zeigt eine Seitenansicht einer generativen Herstellvorrichtung mit einer erfindungsgemäßen Pulverauftragseinheit 4' nach einer zweiten Ausführungsform. Die Vorrichtung 2 weist auf der linken Seite unten eine Bauteilplattform 6 auf der ein teilweise hergestelltes Bauteil 8 angeordnet ist, das in einem Pulverbett 10 mit altem Pulver 14 eingebettet ist. Alt bedeutet in diesem Zusammenhang, dass sich das Pulver bereits im Pulverbett 10 befindet. Das Wort "alt" gibt hier keine Auskunft über das Alter bzw. über die Qualität des Pulvers an. Die Vorrichtung 2 weist auf der rechten Seite unten eine Pulverplattform 12 auf, auf der neues bzw. frisches Pulver 16 angeordnet ist. Neu bedeutet in diesem Zusammenhang, dass sich das Pulver noch nicht im Pulverbett 10 befindet. Die beiden Plattformen 6 und 12 sind durch eine vertikale Zwischenwand 18 voneinander getrennt. Zum Auftragen einer neuen Pulverschicht 20 wird als erstes die Pulverplattform 12 ein wenig nach oben geschoben, so dass das frische Pulver 16 über die Zwischenwand 18 ragt. Die Pulverauftragseinheit 4 bewegt sich von rechts nach links über das frische Pulver 16 über die Zwischenwand 18 und über das Pulverbett 10. Die Pulverauftragseinheit 4 weist eine elektrische Leitung 22 auf. Dabei arbeitet die elektrische Leitung 22 als Beschichter und schiebt einen Pulverberg 24 vor sich her und verteilt dabei gleichmäßig eine neue Pulverschicht 20 auf dem Bauteil 8. In der ersten Ausführungsform weist die Pulverauftragseinheit 4 zusätzlich noch eine Klinge 26 auf, die um die elektrische Leitung 22 angeordnet ist (siehe Figur 1). Oder aber, wie in der Figur 2 abgebildet, kann die elektrische Leitung 22 direkt mit dem Pulverberg 24 in Kontakt treten. Sobald eine neue Pulverschicht 20 auf dem Bauteil 8 aufgebracht wurde, kann mit einer über dem Pulverbett 10 angeordneten Strahlungsquelle 28 diese neue Pulverschicht 20 aufgeschmolzen werden. Dabei trifft ein Hochenergiestrahl 30, wie z. B. ein Laserstrahl oder Elektronenstrahl, in eine Aufbauzone 31 auf die neue Pulverschicht 20. Diese Pulverschicht 20 wird zum Schmelzen bzw. zum Sintern gebracht und es entsteht eine neue Bauteilschicht 32. Sobald die Herstellung der neue Bauteilschicht 32 abgeschlossen ist, wird wie oben erwähnt, frisches Pulver 16 auf das Bauteil 8 auftragen. Die oben aufgeführten Schritte wiederholen sich bis das Bauteil fertig hergestellt worden ist.

Die elektrische Leitung 22 kann aus einem massiven Draht gebildet sein, oder aber wie hier einen Hohlraum 34 aufweisen. Dieser Hohlraum 34 kann mit einem Kühlfluid, wie z.B. Wasser, Helium, Argon und/oder Wasserstoff befüllt sein.

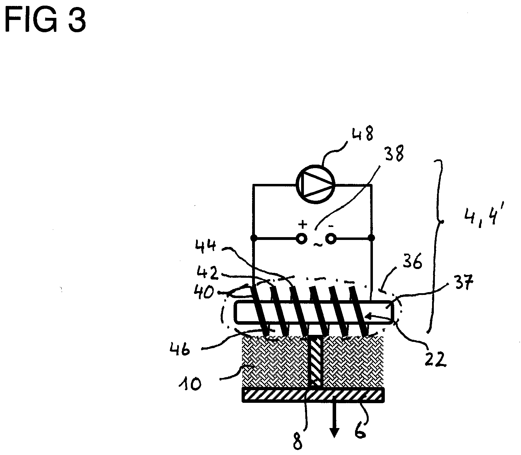

Die Figur 3 zeigt einen Schnitt entlang der Linie III-III in Figur 2. Unten in der Figur 3 ist die Bauteilplattform 6 zu erkennen, auf der das halbfertige Bauteil 8 angeordnet ist und sich im Pulverbett 10 befindet. Direkt über dem Pulverbett 10 ist die Pulverauftragseinheit 4 bzw. 4' angeordnet. Die Pulverauftragseinheit 4 bzw. 4' weist die elektrische Leitung 22 auf, die um einen Kern 37 mit sechs Wicklungen gewickelt ist. Der Kern 37 und die sechs Wicklungen bilden eine Spule 36. So sind in der Figur 3 nur die erste Wicklung 40, die zweite Wicklung 42 und die dritte Wicklung mit Bezugszeichen versehen worden. Zwischen zwei benachbarten Wicklungen sind Isolierungen 46 angeordnet. Hier wird Luft als Isolationsmaterial verwendet. Es ist allerdings darauf hinzuweisen, dass die untere Fläche der Spule 36 geschlossen ist, so dass das Pulver im Pulverberg 24 gleichmäßig und glatt verteilt werden kann. Diese Spule 36 ist an eine Stromquelle 38 angeschlossen. Diese Stromquelle 38 kann sowohl Gleichstrom als auch Wechselstrom erzeugen. Ist die elektrische Leitung 22 hohl, so kann diese zusätzlich an einer Kühlpumpe 48 angeschlossen sein. Diese Pumpe 48 lässt das Kühlmittel durch die hohle elektrische Leitung 22 strömen.

Anhand der Figuren 1 und 2 wird nun die Funktionsweise der erfindungsgemäßen Pulverauftragseinheit 4 bzw. 4' näher erläutert.

In Figur 1 kann an der elektrischen Leitung 22 ein Gleichstrom angelegt sein. Dabei wird die elektrische Leitung 22 heiß. Diese Wärmeenergie der elektrischen Leitung 22 wird sowohl an den Pulverberg 24 als auch den oberen Teil des Bauteils 8 abgegeben. Das Pulver im Pulverberg 24 wird dabei getrocknet. Das im Pulver enthaltene Wasser wird verdampft. Die Temperatur der elektrischen Leitung 22 kann mittels der Kühlpumpe 48 zusätzlich geregelt werden. Soll dagegen nur das Bauteil 8 vorgewärmt werden, so kann an der elektrischen Leitung 22 ein Wechselstrom angelegt werden, der von der Stromquelle 38 geliefert wird. Sobald sich die Pulverauftragseinheit 4 bzw. 4' in der Nähe des Bauteils 8 befindet, wird im Bauteil 8 ein Wechselstrom erzeugt, der das Bauteil 8 entsprechend auf heizt. Das Pulver im Pulverbett 10 weist einen zu hohen elektrischen Widerstand auf, so dass darin kein Wechselstrom fließt.

### Bezugszeichenliste

- 2: Vorrichtung
- 6: Bauteilplattform
- 4, 4': Pulverauftragseinheit
- 8: Bauteil
- 10: Pulverbett
- 12: Pulverplattform
- 14: altes Pulver
- 16: frisches Pulver
- 18: Zwischenwand
- 20: neue Pulverschicht
- 22: elektrische Leitung
- 24: Pulverberg
- 26: Klinge
- 28: Strahlungsquelle
- 30: Hochenergiestrahl
- 31: Aufbauzone
- 32: Bauteilschicht
- 34: Hohlraum
- 36: Spule
- 37: Kern
- 38: Stromquelle
- 40: erste Wickelung
- 42: zweite Wickelung
- 44: dritte Wicklung
- 46: Isolierung
- 48: Kühlpumpe

## Patentansprüche

1. Pulverauftragseinheit für eine Vorrichtung zur generativen Herstellung von Bauteilen mit:
- mindestens einer elektrischen Leitung (22) und
- mindestens einer Stromquelle (38), die an der elektrischen Leitung angeschlossen ist,
**dadurch gekennzeichnet, dass**
- die elektrische Leitung (22) als Pulververteiler und als Heizelement fungiert,
- die elektrische Leitung (22) spulenförmig um einen Kern (37) gewickelt ist, und
- zwischen zwei benachbarten Wicklungen (40, 42) eine Isolierung (46) angeordnet ist, wobei
- die untere Fläche der Spule (36) geschlossen ist, so dass das Pulver im Pulverberg (24) gleichmäßig und glatt verteilbar ist.

2. Pulverauftragseinheit nach Anspruch 1, **dadurch gekennzeichnet, dass** die elektrische Leitung (22) einen Hohlraum (34) aufweist.

3. Pulverauftragseinheit nach Anspruch 2, **dadurch gekennzeichnet, dass** der Hohlraum (34) der elektrischen Leitung (22) mit Kühlfluid füllbar ist.

4. Pulverauftragseinheit nach Anspruch 3, **dadurch gekennzeichnet, dass** die Pulverauftragseinheit (4) eine Kühlpumpe (48) zum Durchströmen des Hohlraums (34) mit Kühlfluid aufweist, die mit dem Hohlraum (34) in fluider Kommunikation steht.

5. Pulverauftragseinheit nach Anspruch 1, **dadurch gekennzeichnet, dass** die elektrische Leitung (22) aus massivem Draht gebildet ist.

6. Pulverauftragseinheit nach mindestens einem der vorherigen Ansprüche, **dadurch gekennzeichnet, dass** die elektrische Leitung (22) starr und/oder flexibel ist.

7. Pulverauftragseinheit nach mindestens einem der vorherigen Ansprüche, **dadurch gekennzeichnet, dass** die Leitung (22) um einen, insbesondere weichmagnetischen, Kern (37) gewickelt ist.

8. Pulverauftragseinheit nach mindestens einem der vorherigen Ansprüche, **dadurch gekennzeichnet, dass** die Stromquelle (38) einen Gleichstrom und/oder einen Wechselstrom erzeugt.

9. Vorrichtung zur generativen Herstellung von Bauteilen mit:
- mindestens einer absenkbaren Bauteilplattform (6),
- mindestens einer Pulverauftragseinheit (4) nach mindestens einem der vorherigen Ansprüche zum Auftragen von mindestens einer Pulverschicht eines Bauteilwerkstoffs auf mindestens einer Aufbauzone (31) der Bauteilplattform (6), wobei die Pulverauftragseinheit (4) relativ zur Bauteilplattform (6) bewegbar ist,
- mindestens einer Strahlungsquelle (28) zum Erzeugen eines Hochenergiestrahls (30), mittels welchem die Pulverschicht (20) im Bereich der Aufbauzone (31) lokal zu einer Bauteilschicht (32) verschmelzbar und/oder versinterbar ist.

10. Verwendung einer Pulverauftragseinheit gemäß einem der Ansprüche 1 bis 8 oder einer Vorrichtung gemäß Anspruch 9 in einem Verfahren zur generativen Herstellung von Bauteilen.

## Claims

1. Powder application unit for a device for the additive manufacturing of components, which unit comprises:
- at least one electrical lead (22) and
- at least one current source (38) which is connected to the electrical lead,
**characterized in that**
- the electrical lead (22) acts as a powder distributor and as a heating element,
- the electrical lead (22) is wound in a coil shape around a core (37), and
- insulation (46) is arranged between two adjacent windings (40, 42),
- the lower surface of the coil (36) being closed, such that the pile (24) of powder can be distributed evenly and smoothly.

2. Powder application unit according to claim 1, **characterized in that** the electrical lead (22) has a cavity (34).

3. Powder application unit according to claim 2, **characterized in that** the cavity (34) in the electrical lead (22) can be filled with cooling fluid.

4. Powder application unit according to claim 3, **characterized in that** the powder application unit (4) has a cooling pump (48) for permeating the cavity (34) with a flow of cooling fluid, which cooling pump is in fluid communication with the cavity (34).

5. Powder application unit according to claim 1, **characterized in that** the electrical lead (22) is formed from solid wire.

6. Powder application unit according to at least one of the preceding claims, **characterized in that** the electrical lead (22) is rigid and/or flexible.

7. Powder application unit according to at least one of the preceding claims, **characterized in that** the lead (22) is wound around a core (37), in particular a soft magnetic core.

8. Powder application unit according to at least one of the preceding claims, **characterized in that** the current source (38) generates a direct current and/or an alternating current.

9. Device for the additive manufacturing of components, which device comprises:
- at least one lowerable component platform (6),
- at least one powder application unit (4) according to at least one of the preceding claims for applying at least one powder layer of a component material to at least one build-up zone (31) of the component platform (6), wherein the powder application unit (4) is movable relative to the component platform (6),
- at least one radiation source (28) for generating a high-energy beam (30), by means of which the powder layer (20) can be locally fused and/or sintered to form a component layer (32) in the region of the build-up zone (31).

10. Use of a powder application unit according to any of claims 1 to 8 or a device according to claim 9 in a method for the additive manufacturing of components.

## Revendications

1. Applicateur de poudre pour un dispositif de production générative de composants, comportant :
- au moins un câble électrique (22), et
- au moins une source d'alimentation (38) connectée au câble électrique, **caractérisé**
- **en ce que** le câble électrique (22) fonctionne comme un distributeur de poudre et un élément de chauffage,
- **en ce que** le câble électrique (22) est enroulé en forme de bobine autour d'un noyau (37), et
- **en ce qu'**une isolation (46) est disposée entre deux enroulements adjacents (40, 42),
- **en ce que** la surface inférieure de la bobine (36) est fermée, de sorte que la poudre puisse être répartie de manière uniforme et lisse dans la poudreuse (24).

2. Applicateur de poudre selon la revendication 1, **caractérisé en ce que** le câble électrique (22) présente une cavité (34).

3. Applicateur de poudre selon la revendication 2, **caractérisé en ce que** la cavité (34) du câble électrique (22) peut être remplie de fluide de refroidissement.

4. Applicateur de poudre (4) selon la revendication 3, **caractérisé en ce qu'**il comporte une pompe de refroidissement (48) permettant l'écoulement du fluide de refroidissement à travers la cavité (34), laquelle pompe de refroidissement est en communication fluidique avec la cavité (34).

5. Applicateur de poudre selon la revendication 1, **caractérisé en ce que** le câble électrique (22) est constitué d'un fil solide.

6. Applicateur de poudre selon au moins l'une des revendications précédentes, **caractérisé en ce que** le câble électrique (22) est rigide et/ou flexible.

7. Applicateur de poudre selon au moins l'une des revendications précédentes, **caractérisé en ce que** le câble (22) est enroulé autour d'un noyau (37), en particulier magnétiquement doux.

8. Applicateur de poudre selon au moins l'une des revendications précédentes, **caractérisé en ce que** la source d'alimentation (38) génère un courant continu et/ou un courant alternatif.

9. Dispositif de production générative de composants, comportant :
- au moins une plate-forme de composants abaissable (6),
- au moins un applicateur de poudre (4) selon au moins l'une des revendications précédentes est utilisé pour appliquer au moins une couche de poudre d'un matériau de composant sur au moins une zone de formage (31) de la plate-forme de composants (6), l'applicateur de poudre (4) étant mobile par rapport à la plate-forme de composants (6),
- au moins une source de rayonnement (28) destinée à générer un faisceau de haute énergie (30), au moyen duquel la couche de poudre (20) peut être fondue et/ou frittée localement pour former une couche de composant (32) au niveau de la zone de formage (31).

10. Utilisation d'un applicateur de poudre selon l'une des revendications 1 à 8 ou d'un dispositif selon la revendication 9 dans un procédé de production générative de composants.
